# EUROPEAN PATENT APPLICATION

(11) **EP 3 442 289 A1**
(43) Date of publication of application: **13.02.2019**
(21) Application number: 17779158.9
(22) Date of filing: 05.04.2017
(51) Int. Cl.: H04W 72/04, H04W 28/06, H04W 88/08, H04W 92/04

(54) **WIRELESS BASE STATION AND COMMUNICATIONS CONTROL METHOD**

(30) Priority: 08.04.2016 JP 2016078472
(71) Applicant: NTT DOCOMO, INC., Chiyoda-ku Tokyo 100-6150 (JP)
(72) Inventor: HAPSARI Wuri Andarmawanti, Tokyo 100-6150 (JP); UMESH Anil, Tokyo 100-6150 (JP); OOKUBO Naoto, Tokyo 100-6150 (JP); UCHINO Tooru, Tokyo 100-6150 (JP)
(74) Representative: Hoffmann Eitle
(86) International application number: PCT/JP2017/014174
(87) International publication number: WO 2017/175780

(57) **Abstract**

The communication control method includes transmitting including a central aggregation device (210) of a radio base station transmitting to a remote device (260) system information (SIB) that is notified to a user device (300) and assignment information indicating radio resource assignment used for notifying the system information, and transmitting including the remote device (260) transmitting the system information to the user device (300) via a predetermined downlink channel based on received assignment information. The transmitting the assignment information to the remote device (260) includes, when the contents of the system information or the assignment information is changed, transmitting the contents changed system information or the contents changed assignment information.

## Description

### TECHNICAL FIELD

The present invention relates to a radio base station including a remote device and a central aggregation device and that performs radio communication with a user device, and to a communication control method.

### BACKGROUND ART

3rd Generation Partnership Project (3GPP) specifies, with the aim of further speeding Long Term Evolution (LTE), LTE-Advanced (hereinbelow, the LTE includes the LTE-Advanced). Moreover, in the 3GPP, specification of succeeding systems of the LTE called 5G (5th generation mobile communication system) and the like is being considered.

So-called C-RAN radio base station including a central aggregation device having a scheduler function (MAC scheduler) and the like in MAC layer, and a remote device arranged at a remote installation site from the central aggregation device is used in the LTE. The remote device includes a radio unit (RF unit) such as PA (Power Amplifier) / LNA (Low Noise Amplifier), a radio transmission - reception module, and a modulation - demodulation module.

The central aggregation device and the remote device are connected to each other by a wired transmission path called a front-haul. For example, Common Public Radio Interface (CPRI) is known as an interface between the central aggregation device and the remote device.

On the occasion of consideration of the specification of the 5G, it is proposed (for example, see Non-Patent Document 1) to mount the function of a radio physical layer (layer 1) in the remote device that used to be mounted in the central aggregation device until now. When the function of the radio physical layer is mounted in the remote device, required transmission band for the front-haul can be reduced.

### PRIOR ART DOCUMENT

### NON-PATENT DOCUMENT

[Non-Patent Document 1] : 3GPP RWS-150051 (3GPP RAN workshop on 5G), "5G Vision for 2020 and Beyond," 3GPP, September, 2015

### SUMMARY OF THE INVENTION

As mentioned above, the following issues arise when the function of the radio physical layer, which used to be mounted in the central aggregation device until now, is mounted in the remote device. That is, the function of an upper layer (layer 2, and the like) such as the MAC scheduler is mounted in the central aggregation device in the same manner as before.

Therefore, it is necessary to transmit from the central aggregation device to the remote device, for example, system information notified to the user device (also called a radio communication terminal or a mobile station), and radio resource assignment information used for notifying the system information. The system information includes Master Information Block (MIB) and System Information Block (SIB).

Moreover, when the contents of the system information or assignment information are changed, it is necessary to transmit the changed contents from the central aggregation device to the remote device. However, if the system information or the assignment information is transmitted frequently, it may tighten a communication zone used in an interface between the central aggregation device and the remote device. Furthermore, it may increase a processing load on the central aggregation device and the remote device.

One approach to reduce the transmission frequency of the system information and the assignment information may be to omit transmission of one of the system information and the assignment information. In this approach, however, it is necessary for the remote device to recognize beforehand that the transmission of the system information or the assignment information has been omitted.

The present invention has been made in view of the above discussion. One object of the present invention is to provide a radio base station and a communication control method in which system information and radio resource assignment information used for notifying the system information can be notified effectively from a central aggregation device to a remote device, even when a function of an upper layer such as the MAC scheduler and a function of a radio physical layer are mounted separately.

A radio base station according to one aspect of the present invention includes a remote device and a central aggregation device and performs radio communication with a user device. The central aggregation device includes an information transmitting unit that transmits to the remote device system information that is notified to the user device and assignment information indicating radio resource assignment used for notifying the system information, and the remote device includes an information receiving unit that receives the system information and the assignment information; and a channel transmitting unit that transmits the system information to the user device via a predetermined downlink channel based on the assignment information received by the information receiving unit, wherein the information transmitting unit, when the contents of the system information or the assignment information is changed, transmits the contents changed system information or the contents changed assignment information.

A radio base station according to another aspect of the present invention includes a remote device and a central aggregation device and performs radio communication with a user device. The central aggregation device includes an information transmitting unit that transmits to the remote device system information that is notified to the user device and assignment information indicating radio resource assignment used for notifying the system information, and the remote device includes an information receiving unit that receives the system information and the assignment information; and a channel transmitting unit that transmits the system information to the user device via a predetermined downlink channel based on the assignment information received by the information receiving unit, wherein the information transmitting unit, in the cell setting performed by the remote device and the central aggregation device, omits transmission of the system information and the assignment information, and transmits the system information and the assignment information to the remote device every time the system information is transmitted to the user device.

A communication control method according to still another aspect of the present invention is implemented in a radio base station including a remote device and a central aggregation device and that performs radio communication with a user device. The communication control method includes transmitting including the central aggregation device transmitting to the remote device system information that is notified to the user device and assignment information indicating radio resource assignment used for notifying the system information; and transmitting including the remote device transmitting the system information to the user device via a predetermined downlink channel based on received assignment information, wherein the transmitting the assignment information to the remote device includes, when the contents of the system information or the assignment information is changed, transmitting the contents changed system information or the contents changed assignment information.

A communication control method according to still another aspect of the present invention is implemented in a radio base station including a remote device and a central aggregation device and that performs radio communication with a user device. The communication control method includes transmitting including the central aggregation device transmitting to the remote device system information that is notified to the user device and assignment information indicating radio resource assignment used for notifying the system information; transmitting including the remote device transmitting the system information to the user device via a predetermined downlink channel based on received assignment information; and omitting the transmission of the system information and the assignment information in the cell setting performed by the remote device and the central aggregation device, wherein the transmitting the assignment information to the remote device includes transmitting the system information and the assignment information to the remote device every time the system information is transmitted to the user device.

### BRIEF DESCRIPTION OF DRAWINGS

FIG. 1 is an overall structural diagram of a radio communication system 10.
FIG. 2 is an overall block diagram of the radio communication system 10.
FIG. 3 is a functional block diagram of a central aggregation device 210.
FIG. 4 is a functional block diagram of a remote device 260.
FIG. 5 is a conceptual diagram for explaining an operation of notifying system information performed by the central aggregation device 210 and the remote device 260.
FIG. 6 is a view indicating mapping of a logical channel, a transport channel, and a physical channel relating to transmission of the system information.
FIG. 7 is a view indicating a communication sequence in an Example 1 of an operation of notifying radio resource assignment information and contents of SIB.
FIG. 8 is a view indicating a communication sequence in an Example 2 of an operation of notifying the radio resource assignment information and the contents of the SIB.
FIG. 9 is a view indicating a communication sequence in an Example 3 of an operation of notifying the radio resource assignment information and the contents of the SIB.
FIG. 10 is a view indicating a communication sequence in an Example 4 of an operation of notifying the radio resource assignment information and the contents of the SIB.

### MODES FOR CARRYING OUT THE INVENTION

Exemplary embodiments are explained below with reference to the accompanying drawings. In the drawings, structural elements having the same function or configuration are indicated by the same or similar reference numerals and the explanation thereof is appropriately omitted.

### (1) Overall structural configuration of radio communication system

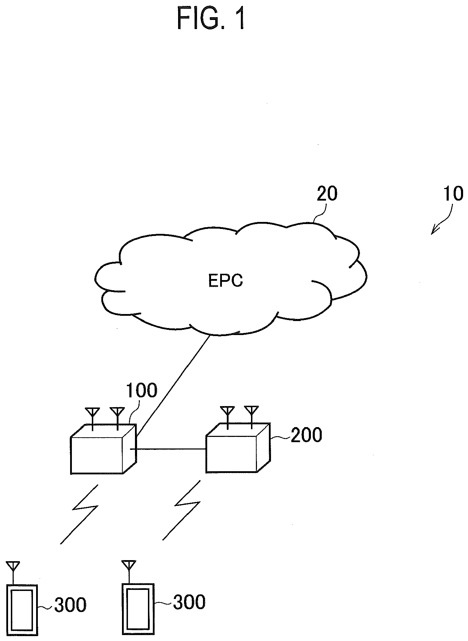

FIG. 1 is an overall structural diagram of a radio communication system 10 according to the present embodiment. The radio communication system 10 is a radio communication system in accordance with Long Term Evolution (LTE), and 5G which is a succeeding system of the LTE.

In the present embodiment, the LTE (including LTE-Advanced) will be appropriately called "4G" to show the correspondence thereof with the 5G. Moreover, in the present embodiment, a radio communication system having a configuration that is right after the 5G was introduced is assumed, and LTE assisted operation in which the 5G assists the 4G is realized.

The radio communication system 10 includes a core network 20, a radio base station 100, a radio base station 200, and one or more user devices 300.

The core network 20 is also called Evolved Packet Core (EPC) and is constituted by a mobility management entity (MME), a serving gateway (S-GW), PDN gateway (P-GW), and the like.

The radio base station 100 is a radio base station in accordance with the 4G and is also called eNodeB. The radio base station 100 is connected to a device (node) constituting the core network 20 via S1-MME or S1-U interface.

The radio base station 200 is a radio base station in accordance with the 5G. The radio base station 200 is connected to the radio base station 100 via X2 interface (below conveniently refers to as X2-AP', X2-U').

The user device 300 (UE, user equipment) can perform radio communication with the radio base station 100 and the radio base station 200. The user device 300 may be called a radio communication terminal or a mobile station. The radio base station 200 and the user device 300 can be caused to support, by controlling a radio signal transmitted by a plurality of antenna elements, Massive MIMO that generates a beam having higher directivity, carrier aggregation (CA) that uses a plurality of component carriers (CC), dual connectivity (DC) in which a component carrier is transmitted at the same time between a plurality of radio base stations and the user device 300, and the like.

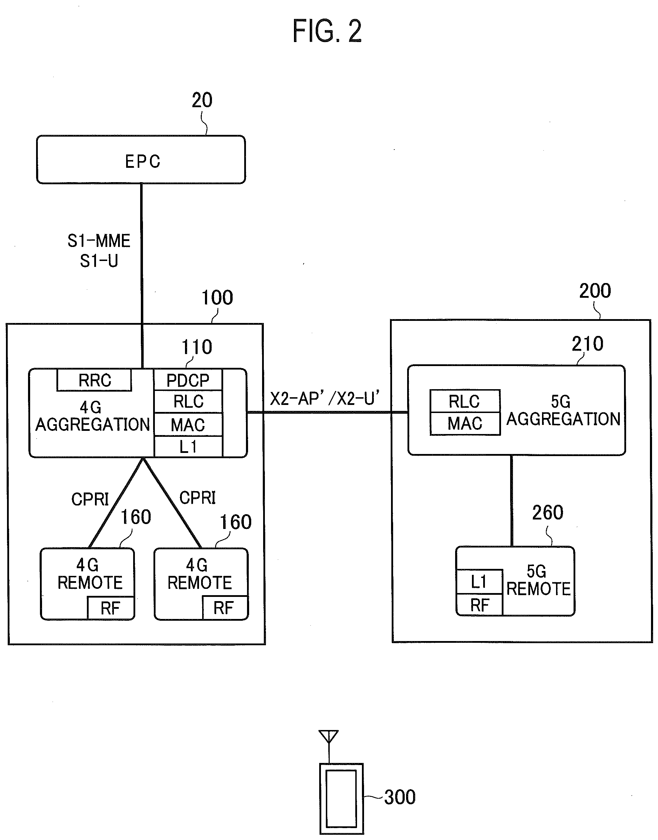

FIG. 2 is an overall block diagram of the radio communication system 10. As shown in FIG. 2, the radio base station 100 includes a central aggregation device 110 and one or more remote devices 160. The radio base station 200 includes a central aggregation device 210 and a remote device 260. It is allowable that each of the radio base station 100 and the radio base station 200 includes some device other than the central aggregation device and the remote device.

The central aggregation device 110 includes a radio physical layer (L1), a medium access control layer (MAC), a radio link control layer (RLC), and a packet data convergence protocol layer (PDCP). Moreover, the central aggregation device 110 includes a radio resource control layer (RRC) as an upper layer of the PDCP.

The remote device 160 can be installed at a site that is remote from the central aggregation device 110. The remote device 160 includes a radio unit (RF unit) such as the PA (Power Amplifier) / LNA (Low Noise Amplifier), a radio transmission - reception module, and a modulation - demodulation module.

The central aggregation device 110 is also called a digital processing unit (Digital Unit (DU)) or Central Unit (CU), and the remote device 160 is also called a radio processing unit (Radio Unit (RU)) or Remote Unit (RU). The central aggregation device 110 and the remote device 160 are connected to each other via a wired transmission path called a front-haul. For example, the Common Public Radio Interface (CPRI) is used as an interface between the central aggregation device 110 and the remote device 160.

Although the central aggregation device 210 and the remote device 260 respectively correspond to the central aggregation device 110 and the remote device 160, the layer configurations thereof are different.

Specifically, the central aggregation device 210 includes the medium access control layer (MAC) and the radio link control layer (RLC). The remote device 260 includes the radio physical layer (L1) and the radio unit (RF).

As described above, the central aggregation device 210 is connected to the central aggregation device 110 via X2-AP', X2-U' interface.

### (2) Functional block configuration of radio communication system

A functional block configuration of the radio communication system 10 is explained below. Specifically, functional block configurations of the central aggregation device 210 and the remote device 260 are explained.

### (2.1) Central aggregation device 210

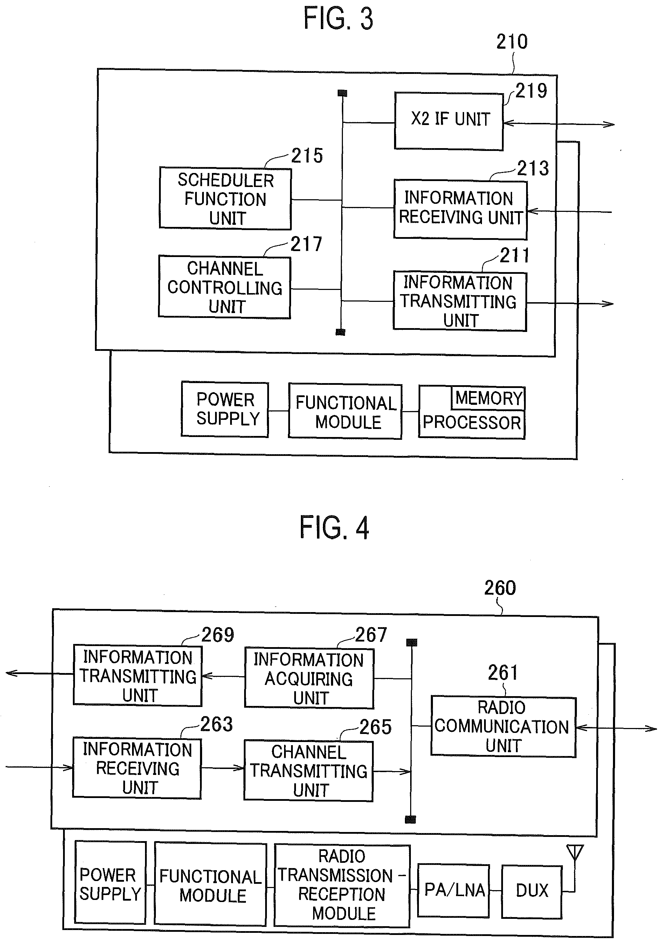

FIG. 3 is a functional block diagram of the central aggregation device 210. As shown in FIG. 3, the central aggregation device 210 includes an information transmitting unit 211, an information receiving unit 213, a scheduler function unit 215, a channel controlling unit 217, and X2 IF unit 219.

As shown in FIG. 3, each functional block of the central aggregation device 210 is implemented by hardware elements such as a processor (including a memory), a functional module (external connection IF and the like) and a power supply.

The information transmitting unit 211 transmits to the remote device 260 information required to perform radio communication with the radio base station 100, specifically, between the remote device 260 and the user device 300.

Particularly, in the present embodiment, the information transmitting unit 211 transmits to the remote device 260 system information, specifically, the Master Information Block (MIB) and the System Information Block (SIB), to be notified to the user device 300.

The information transmitting unit 211 transmits to the remote device 260 assignment information indicating the radio resource assignment used for notifying the system information. Specifically, in the case of the MIB, the information transmitting unit 211 transmits to the remote device 260 the assignment information, specifically, SS (Synchronization Signal) information, of PBCH (Physical Broadcast Channel) used for notifying the MIB.

Moreover, in the case of the SIB, the information transmitting unit 211 transmits to the remote device 260 the assignment information, specifically PDCCH (Physical Downlink Control Channel) information, of PDSCH (Physical Downlink Shared Channel) used for the transmission of the SIB.

When the contents of the system information or the assignment information is changed, the information transmitting unit 211 can transmit the contents changed system information or the contents changed assignment information. That is, when one of the system information and the assignment information is changed, the information transmitting unit 211 transmits only the changed information, and the information transmitting unit 211 transmits both when both are changed.

That is, the information transmitting unit 211 transmits the contents changed system information only when the contents of the system information has been changed. Moreover, the information transmitting unit 211 transmits the contents changed assignment information only when the contents of the assignment information has been changed.

Moreover, the information transmitting unit 211 can omit transmission of the system information and the assignment information when the remote device 260 and the central aggregation device 210 perform cell setting. The cell setting means setting various parameters in a memory and the like to allow performing radio communication with the user device 300 in accordance with those parameters.

Moreover, when transmission of the system information and the assignment information is omitted in the cell setting, the information transmitting unit 211 transmits the system information and the assignment information to the remote device 260 every time the system information (MIB or SIB) is transmitted to the user device 300.

The information receiving unit 213 receives the information transmitted from the remote device 260. For example, the information receiving unit 213 receives downlink quality information such as CQI (Channel Quality Indicator), PMI (Precoding Matrix Indicator), RI (Rank Indicator), and the like. Moreover, the information receiving unit 213 receives a judgment result of CSI (Channel State Information) and SRS (Sounding Reference Signal), a random access response (RAR), a scheduling request in the downlink direction, and the like.

The scheduler function unit 215 performs scheduling (MAC scheduler and the like) of the radio resource to the user device 300 depending on a status of the plurality of the user devices 300 connected to the radio base station 200, a scheduling request from each of the user devices 300, and the like. The scheduler function unit 215 notifies the channel controlling unit 217 of the result of the scheduling.

The channel controlling unit 217 performs a control of the various channels, specifically, a logical channel, a transport channel, and a physical channel, transmitted and received between the radio base station 100 (specifically, the remote device 260) and the user device 300.

For example, the channel controlling unit 217 determines a transmission timing and contents of the PDCCH, the PBCH, the PDSCH, PHICH (Physical HARQ Indicator Channel), PCFICH (Physical Control Format Indicator Channel), and the like as the physical channel in the downlink direction. Moreover, the channel controlling unit 217 determines a transmission timing and contents of DLSCH (Downlink Shared Channel), BCH (Broadcast Channel), PCH (Paging Channel), and the like as the transport channel in the downlink direction.

For example, the channel controlling unit 217 performs a control related to reception of PUCCH (Physical Uplink Control Channel), the SRS (Sounding Reference Signal), PRACH (Physical Random Access Channel), PUSCH (Physical Uplink Shared Channel), and the like as the physical channel in the uplink direction.

The channel controlling unit 217 notifies the information transmitting unit 211 of the contents of the control of the various channels.

The X2 IF unit 219 provides an interface for realizing communication with the central aggregation device 110. Specifically, the X2 IF unit 219 is an interface that directly connects the central aggregation device 110 and the central aggregation device 210 by using the MAC and the RLC. It is preferable that the X2 IF unit 219 is an existing open interface. Data transmitted and received by the user device 300 is relayed to the radio base station 100 via the X2 IF unit 219.

### (2.2) Remote device 260

FIG. 4 is a functional block diagram of the remote device 260. As shown in FIG. 4, the remote device 260 includes a radio communication unit 261, an information receiving unit 263, a channel transmitting unit 265, an information acquiring unit 267, and an information transmitting unit 269.

As shown in FIG. 4, each functional block of the remote device 260 is implemented by hardware elements such as a duplexer, the PA (Power Amplifier) / LNA (Low Noise Amplifier), a radio transmission - reception module (RF conversion), a functional module (quadrature modulation and demodulation and the like) and a power supply.

The radio communication unit 261 performs radio communication with the user device 300. Specifically, the radio communication unit 261 performs the radio communication with the user device 300 according to the specification of the 5G. As mentioned earlier, the radio communication unit 261 can support the Massive MIMO, the carrier aggregation (CA), the dual connectivity (DC), and the like.

The information receiving unit 263 receives the information transmitted from the central aggregation device 210. Specifically, the information receiving unit 263 receives information that is required for the radio communication and transmitted from the central aggregation device 210.

Particularly, in the present embodiment, the information receiving unit 263 receives the system information, specifically, the contents of the MIB and the SIB. Moreover, the information receiving unit 263 receives the assignment information, specifically, radio resource assignment information (SS, PDCCH) used to transmit the system information to be transmitted via the PBCH (in the case of the MIB) and the PDSCH (in the case of the SIB).

The channel transmitting unit 265 transmits various channels, specifically, a transport channel in the downlink direction, a physical channel, and the like, to the user device 300.

Particularly, in the present embodiment, the channel transmitting unit 265 transmits the system information via a predetermined downlink channel (PBCH or PDSCH) to user device 300 based on the assignment information received by the information receiving unit 263. Moreover, the channel transmitting unit 265 transmits the PDCCH and the like.

The physical channel, specifically, the channels such as the PDSCH and the PDCCH, transmitted to the user device 300 can be generated by the central aggregation device 210 or the remote device 260. For example, when the remote device 260 generates the channel, the remote device 260 (channel transmitting unit 265) receives the contents transmitted from the central aggregation device 210 via the channel, and generates the channel that includes those contents and that has a predetermined format.

On the other hand, when the central aggregation device 210 generates the channel, the remote device 260 transmits the channel received from the central aggregation device 210 as is to a radio space.

The information acquiring unit 267 acquires the downlink quality information (CQI and the like), the scheduling request in the downlink direction, and the like, transmitted from the user device 300.

The information transmitting unit 269 transmits to the central aggregation device 210 the downlink quality information, the scheduling request in the downlink direction, and the like, acquired by the channel transmitting unit 265.

### (3) Operation of radio communication system

An operation of the radio communication system 10 is explained below. Specifically, an operation of notification of the system information to the user device 300 performed by the central aggregation device 210 and the remote device 260 is explained.

### (3.1) Outline of operation

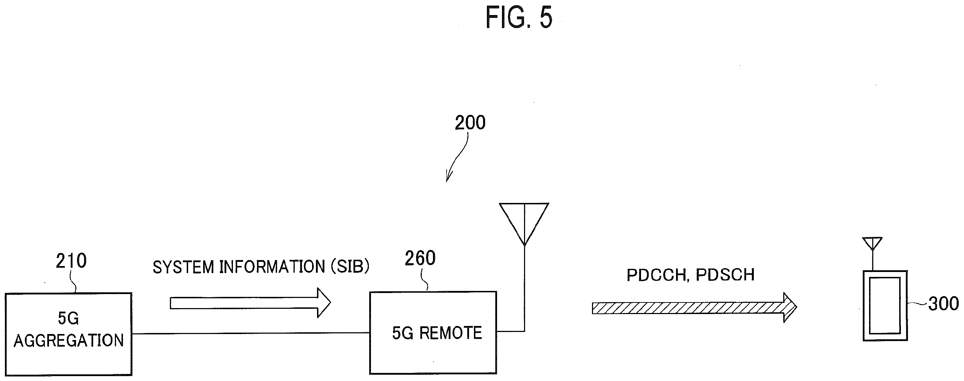

FIG. 5 is a conceptual diagram for explaining an operation of notifying system information performed by the central aggregation device 210 and the remote device 260. Specifically, FIG. 5 shows an exemplary operation outline in which the SIB is notified as the system information.

As shown in FIG. 5, the central aggregation device 210 transmits the system information (SIB) to the remote device 260. Upon receiving the system information, the remote device 260 transmits the system information to the user device 300 by using the PDCCH and the PDSCH.

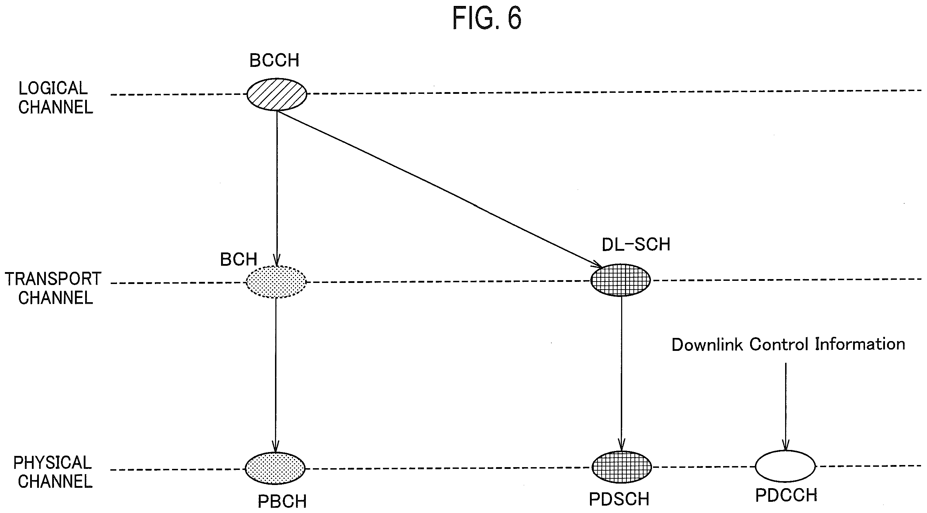

FIG. 6 is a view indicating mapping of a logical channel, a transport channel, and a physical channel relating to transmission of the system information.
The mapping of only the main channel relating to the transmission of the system information is shown in FIG. 6.

As shown in FIG. 6, the system information (MIB, SIB) is mapped at first with BCCH (Broadcast Control Channel) that is a logical channel. The BCCH is a logical channel used for notifying the system information.

In the case of the MIB, the BCCH is mapped with the BCH (Broadcast Channel) that is a transport channel. Furthermore, the BCH is mapped with the PBCH (Physical Broadcast Channel) that is a physical channel. The MIB is transmitted every 40 ms. Moreover, the same contents is repeatedly transmitted four times during 40 ms, and those MIB can be subjected to soft combining.

In the case of the SIB, the BCCH is mapped with the DLSCH (Downlink Shared Channel) that is a transport channel. The transmission frequency of the SIB varies depending on the type thereof, and, for example, SIB1 is transmitted every 80 ms. Moreover, the same contents is repeatedly transmitted four times during 80 ms, and those SIB1 can be subjected to soft combining.

The DLSCH is used for transmission of the system information, and control information and user data in the downlink direction. The DLSCH is mapped with the PDSCH (Physical Downlink Shared Channel) that is a physical channel.

DCI (Downlink Control Information) containing information about the radio resource such as the transmission timing of the PDSCH is notified to the user device 300 by the PDCCH (Physical Downlink Control Channel). Therefore, the PDCCH and the PDSCH are changed accompanying a change in the contents of the SIB.

### (3.2) Notification sequence of system information

A notification sequence of the system information is explained below. Specifically, an operation of notifying the SIB and the radio resource assignment information that is necessary for transmitting the SIB will be explained while giving a few examples.

### (3.2.1) Operation Example 1

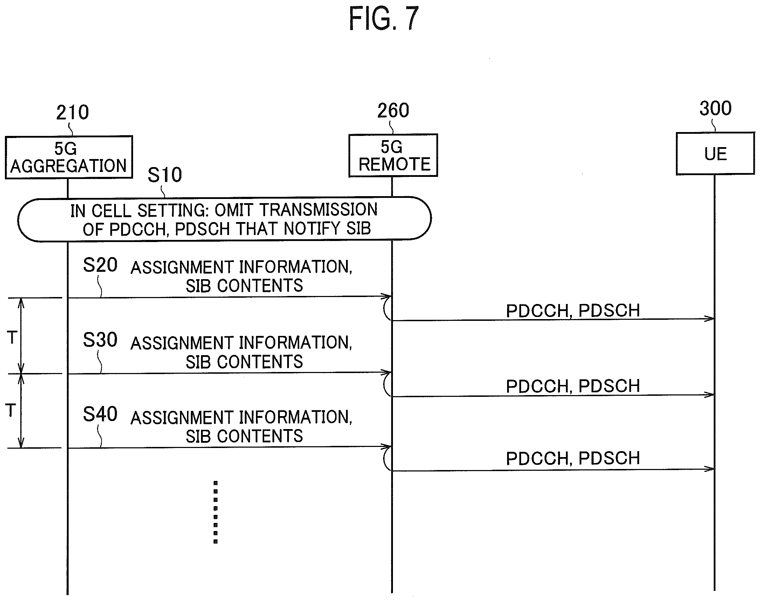

FIG. 7 is a view indicating a communication sequence in an Example 1 of an operation of notifying the radio resource assignment information and the contents of the SIB.

In Operation Example 1, in the cell setting performed by the remote device 260 and the central aggregation device 210, transmission of the PDCCH and the PDSCH that notify the radio resource assignment information used for notifying the SIB and the contents of the SIB is omitted (S10).

That is, the remote device 260 does not transmit the PDCCH and the PDSCH at the time of performing the cell setting. Moreover, in the cell setting performed by the remote device 260 and the central aggregation device 210, the radio resource assignment information used for notifying the SIB and the contents of the SIB are not transmitted from the central aggregation device 210 to the remote device 260.

On the other hand, in Operation Example 1, a combination of the radio resource assignment information used for notifying the SIB, specifically, the information that is transmitted via the PDCCH, and the contents of the SIB transmitted via the PDSCH, is always transmitted from the central aggregation device 210 to the remote device 260 at a predetermined cycle T (e.g., 80 ms, same applies to the following operation examples) (S20 to S40).

### (3.2.2) Operation Example 2

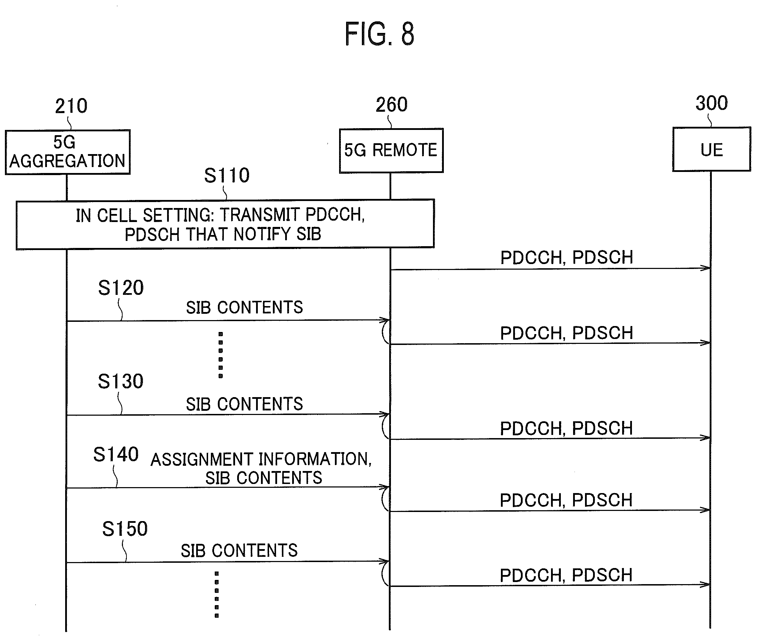

FIG. 8 is a view indicating a communication sequence in an Example 2 of an operation of notifying the radio resource assignment information and the contents of the SIB.

In Operation Example 2, in the cell setting performed by the remote device 260 and the central aggregation device 210, the radio resource assignment information used for notifying the SIB and the contents of the SIB are transmitted from the central aggregation device 210 to the remote device 260 and then transmitted to the user device 300 by the PDCCH and the PDSCH, respectively, (S110).

In Operation Example 2, the assignment information is not transmitted always, and the assignment information is transmitted from the central aggregation device 210 to the remote device 260 only when a change occurs in the contents thereof (that is, the radio resource block to use) (S140) . The assignment information is transmitted to the user device 300 via the PDCCH.

On the other hand, the contents of the SIB is always transmitted from the central aggregation device 210 to the remote device 260, and, the assignment information and the contents of the SIB are transmitted from the remote device 260 to the user device 300 via the PDCCH and the PDSCH (S120, S130, S150) .

### (3.2.3) Operation Example 3

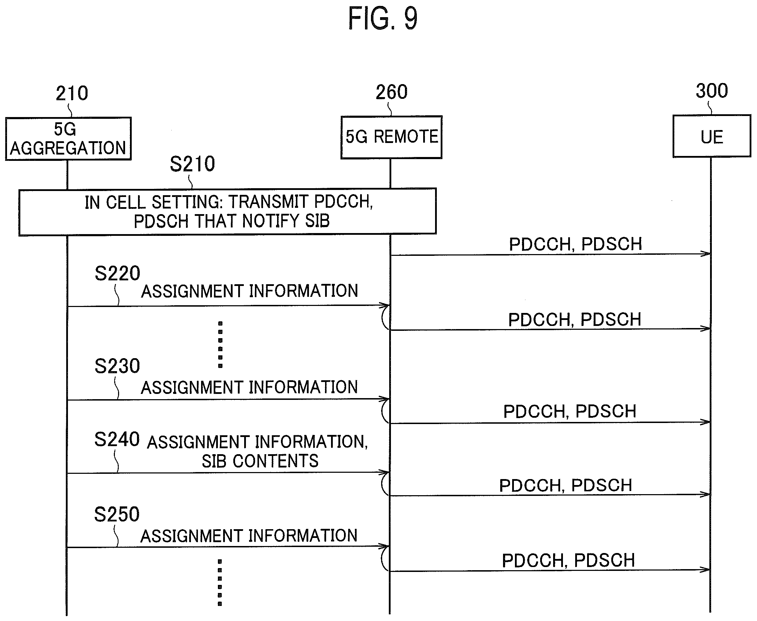

FIG. 9 is a view indicating a communication sequence in an Example 3 of an operation of notifying the radio resource assignment information and the contents of the SIB.

Even in Operation Example 3, in the cell setting performed by the remote device 260 and the central aggregation device 210, the radio resource assignment information used for notifying the SIB and the contents of the SIB are transmitted from the central aggregation device 210 to the remote device 260 and then transmitted to the user device 300 by the PDCCH and the PDSCH, respectively, (S210).

In Operation Example 3, the contents of the SIB is not transmitted always, and the contents of the SIB is transmitted from the central aggregation device 210 to the remote device 260 only when a change occurs in the contents thereof (that is, contents of the system information) (S240). The changed contents of the SIB is transmitted to the user device 300 by using the PDCCH and the PDSCH.

On the other hand, the radio resource assignment information is always transmitted from the central aggregation device 210 to the remote device 260, and, then transmitted from the remote device 260 to the user device 300 via the PDCCH (S220, S230, S250). Moreover, the contents of the SIB is also transmitted to the user device 300 via the PDSCH.

### (3.2.4) Operation Example 4

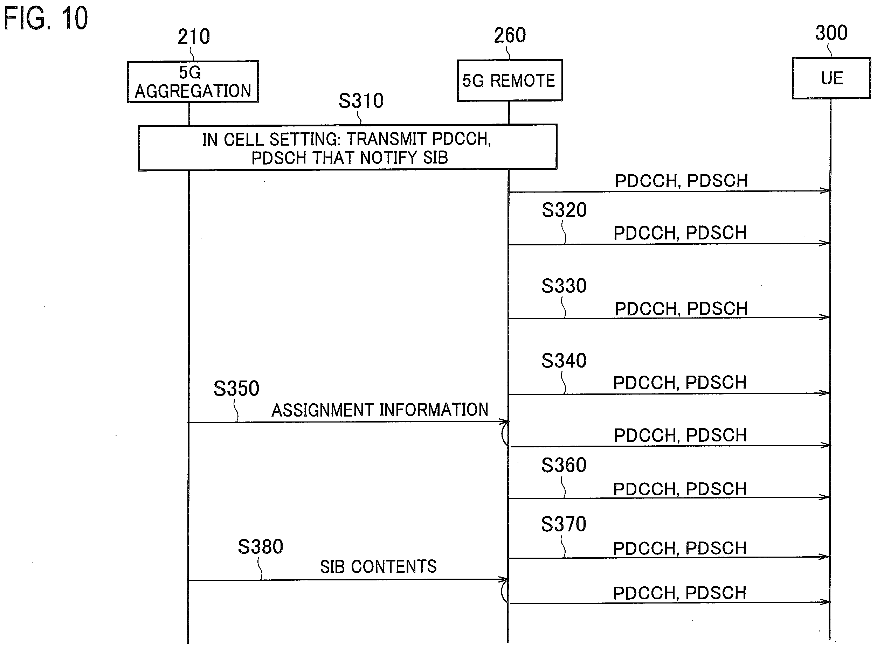

FIG. 10 is a view indicating a communication sequence in an Example 4 of an operation of notifying the radio resource assignment information and the contents of the SIB.

Even in Operation Example 4, in the cell setting performed by the remote device 260 and the central aggregation device 210, the radio resource assignment information used for notifying the SIB and the contents of the SIB are transmitted from the central aggregation device 210 to the remote device 260 and then transmitted to the user device 300 by the PDCCH and the PDSCH, respectively, (S310).

In Operation Example 4, neither the radio resource assignment information nor the contents of the SIB is transmitted always, and the assignment information or the contents of the SIB is transmitted from the central aggregation device 210 to the remote device 260 only when a change occurs in the contents thereof.

Specifically, the assignment information is transmitted from the central aggregation device 210 to the remote device 260 only when a change occurs in the assignment information (S350). The changed assignment information is transmitted to the user device 300 via the PDCCH.

Moreover, the changed contents of the SIB are transmitted from the central aggregation device 210 to the remote device 260 when a change occurs in the contents of the SIB (S380). The changed contents of the SIB are transmitted to the user device 300 by using the PDCCH and the PDSCH.

On the other hand, when there is no change in the assignment information and the contents of the SIB, the assignment information and the contents of the SIB are transmitted from the remote device 260 to the user device 300 via the PDCCH and the PDSCH (S320, S330, S340, S360, S370).

### (4) Effects and advantages

According to the present embodiment, the following effects and advantages can be obtained. Specifically, when the contents of the system information or the assignment information is changed, the central aggregation device 210 (information transmitting unit 211) transmits to the remote device 260 the contents changed system information or the contents changed assignment information.

Specifically, as explained in connection with Operation Example 1, in the cell setting performed by the remote device 260 and the central aggregation device 210, the transmission of the PDCCH and the PDSCH that notify the radio resource assignment information used for notifying the SIB and the contents of the SIB is omitted. On the other hand, the central aggregation device 210 transmits the system information and the assignment information to the remote device 260 every time the system information is transmitted to the user device 300.

According to Operation Example 1, the operation at the time of the cell setting can be simplified contributing to quicker cell setting. Moreover, when the PDCCH and the PDSCH are generated in the central aggregation device 210, because the remote device 260 can simply transmit the PDCCH and the PDSCH received from the central aggregation device 210 as is to the radio space, this contributes to suppressing the performance desired for the remote device 260.

Moreover, as explained in connection with Operation Example 2, the central aggregation device 210 can transmit the contents changed assignment information only when the contents of the assignment information has been changed.

According to Operation Example 2, when there is no change in the contents of the assignment information, because only the system information (SIB) is transmitted to the remote device 260, a band occupied by an interface (CPRI and the like) between the central aggregation device 210 and the remote device 260 can be reduced.

Moreover, according to Operation Example 3, the central aggregation device 210 transmits to the remote device 260 the contents changed system information only when the contents of the system information has been changed.

According to Operation Example 3, when there is no change in the contents of the system information, because only the assignment information (SIB) is transmitted to the remote device 260, like in Operation Example 2, a band occupied by an interface between the central aggregation device 210 and the remote device 260 can be reduced.

Moreover, because Operation Example 4 is practically a combination of Operation Example 2 and Operation Example 3, a band occupied by an interface between the central aggregation device 210 and the remote device 260 can be reduced further.

Thus, according to the radio base station 100, the system information and the radio resource assignment information used for notifying the system information can be notified effectively from the central aggregation device 210 to the remote device 260.

### (5) Other embodiments

The present invention has been explained in detail by using the above mentioned embodiments; however, it is self-evident to a person skilled in the art that the present invention is not limited to the embodiments explained herein and that the embodiments can be modified or improved in various ways.

The above embodiments are explained by taking mainly the SIB (e.g., SIB1) as the system information, for example; however the present invention is not limited to the SIB1 and can be similarly applied when transmitting other SIB or MIB.

Moreover, in the above embodiments, a radio communication system having a configuration that is right after the 5G was introduced is assumed, and the LTE assisted operation in which the 5G assists the 4G is realized. However, the present invention is applicable not only to such LTE assisted operation but also, for example, to operation in the 5G alone.

Furthermore, though an explanation has been given in the above embodiments by using the terms prescribed in the 3GPP mainly, the terms can be replaced with some other terms. For example, as also mentioned in the above embodiments, the user device can be called a radio communication terminal, a mobile station, a user terminal, and the like. Moreover, the radio base station can be called a node, a radio communication device or system, and the like.

The sequences, flowcharts, and the like in the embodiments described above may be rearranged in order unless it causes a contradiction.

Note that the terms used in the descriptions of this specification and/or terms necessary to understand this specification may be replaced with terms having the same or similar meanings. For example, a channel and/or a symbol may be a signal, or a signal may be a message. In addition, the terms "system" and "network" may be used interchangeably.

Moreover, the above-described parameters and the like may be expressed by absolute values, by relative values from specified values, or by other associated information. For example, radio resources may be instructed by an index.

The radio base stations (the radio base stations 100 and 200, hereinafter referred as a base station) can accommodate one or more (for example, three) cells (also called sectors). When a base station has multiple cells, the entire coverage area of the base station can be divided into multiple smaller areas.

The term "cell" or "sector" means part or the whole of the coverage area provided by a base station and/or a subsystem of the base station that provide communication services in this coverage. Further, the terms "base station", "eNB", "cell", and "sector" can be used interchangeably in this specification. In some cases, a base station (BS) is also called terms such as a fixed station, a NodeB, an eNodeB (eNB), an access point, a femtocell, and a small cell.

The UE 300 is also called in some cases by those skilled in the art, a subscriber station, a mobile unit, a subscriber unit, a wireless unit, a remote unit, a mobile device, a wireless device, a wireless communication device, a remote device, a mobile subscriber station, an access terminal, a mobile terminal, a wireless terminal, a remote terminal, a handset, a user agent, a mobile client, a client, or some other suitable terms.

"The expression "based on" used in this specification does not mean "based only on" unless explicitly stated otherwise. In other words, the expression "based on" means both "based only on" and "based at least on".

In addition, the terms "including", "comprising", and other variations thereof are intended to be comprehensive as with "comprise". Moreover, the term "or" used in this specification or the scope of claims is intended not to be exclusive disjunction.

Any reference of the elements using names such as "first", "second", and the like used in this specification does not limit the amount or the order of these elements in general. These names can be used in this specification as a convenient way of discriminating two or more elements. Thus, referring to a first element and a second element does not mean that only the two elements can be employed in the specification or that the first element should precede the second element in some form.

In the entirety of this specification, for example, when articles such as a, an, and the in English are added in translation, these articles also mean to include plurality as long as the context does not clearly indicate the singularity.

The present invention can be expressed as below. A radio base station (radio base station 100) according to one aspect of the present invention includes a remote device (remote device 260) and a central aggregation device (central aggregation device 210) and performs radio communication with a user device (user device 300), wherein the central aggregation device includes an information transmitting unit (information transmitting unit 211) that transmits to the remote device system information (e.g., SIB) that is notified to the user device and assignment information (e.g., assignment information transmitted via PDCCH) indicating radio resource assignment used for notifying the system information, and the remote device includes an information receiving unit (information receiving unit 263) that receives the system information and the assignment information; and a channel transmitting unit (channel transmitting unit 265) that transmits the system information to the user device via a predetermined downlink channel (e.g., PDSCH) based on the assignment information received by the information receiving unit, wherein the information transmitting unit, when the contents of the system information or the assignment information is changed, transmits the contents changed system information or the contents changed assignment information.

In the above aspect of the present invention, the information transmitting unit transmits the contents changed system information only when the contents of the system information is changed.

In the above aspect of the present invention, the information transmitting unit transmits the contents changed assignment information only when the contents of the assignment information is changed.

A radio base station according to another aspect of the present invention includes a remote device and a central aggregation device and performs radio communication with a user device. The central aggregation device includes an information transmitting unit that transmits to the remote device system information that is notified to the user device and assignment information indicating radio resource assignment used for notifying the system information, and the remote device includes an information receiving unit that receives the system information and the assignment information; and a channel transmitting unit that transmits the system information to the user device via a predetermined downlink channel based on the assignment information received by the information receiving unit, wherein the information transmitting unit, in the cell setting performed by the remote device and the central aggregation device, omits transmission of the system information and the assignment information, and transmits the system information and the assignment information to the remote device every time the system information is transmitted to the user device.

A communication control method according to still another aspect of the present invention is implemented in a radio base station including a remote device and a central aggregation device and that performs radio communication with a user device. The communication control method includes transmitting including the central aggregation device transmitting to the remote device system information that is notified to the user device and assignment information indicating radio resource assignment used for notifying the system information; and transmitting including the remote device transmitting the system information to the user device via a predetermined downlink channel based on received assignment information, wherein the transmitting the assignment information to the remote device includes, when the contents of the system information or the assignment information is changed, transmitting the contents changed system information or the contents changed assignment information.

A communication control method according to still another aspect of the present invention is implemented in a radio base station including a remote device and a central aggregation device and that performs radio communication with a user device. The communication control method includes transmitting including the central aggregation device transmitting to the remote device system information that is notified to the user device and assignment information indicating radio resource assignment used for notifying the system information; transmitting including the remote device transmitting the system information to the user device via a predetermined downlink channel based on received assignment information; and omitting the transmission of the system information and the assignment information in the cell setting performed by the remote device and the central aggregation device, wherein the transmitting the assignment information to the remote device includes transmitting the system information and the assignment information to the remote device every time the system information is transmitted to the user device.

As described above, the details of the present invention have been disclosed by using the embodiment of the present invention. However, the description and drawings which constitute part of this disclosure should not be interpreted so as to limit the present invention. From this disclosure, various alternative embodiments, examples, and operation techniques will be easily apparent to a person skilled in the art.

The entire contents of Japanese Patent Application 2016-078472 (filed on April 8, 2016) are incorporated in the description of the present application by reference.

### INDUSTRIAL APPLICABILITY

According to the radio base station and the communication control method, the system information and the radio resource assignment information used for notifying the system information can be notified effectively from the central aggregation device to the remote device, even when the function of the upper layer such as the MAC scheduler and the function of the radio physical layer are mounted separately.

### EXPLANATION OF REFERENCE NUMERALS

- 10: radio communication system
- 20: core network
- 100: radio base station
- 110: central aggregation device
- 160: remote device
- 200: radio base station
- 210: central aggregation device
- 211: information transmitting unit
- 213: information receiving unit
- 215: scheduler function unit
- 217: channel controlling unit
- 219: X2 IF unit
- 260: remote device
- 261: radio communication unit
- 263: information receiving unit
- 265: channel transmitting unit
- 267: information acquiring unit
- 269: information transmitting unit
- 300: user device

## Claims

1. A radio base station including a remote device and a central aggregation device and that performs radio communication with a user device, wherein
the central aggregation device includes an information transmitting unit that transmits to the remote device system information that is notified to the user device and assignment information indicating radio resource assignment used for notifying the system information, and
the remote device includes
an information receiving unit that receives the system information and the assignment information; and
a channel transmitting unit that transmits the system information to the user device via a predetermined downlink channel based on the assignment information received by the information receiving unit, wherein
the information transmitting unit, when the contents of the system information or the assignment information is changed, transmits the contents changed system information or the contents changed assignment information.

2. The radio base station as claimed in Claim 1, wherein the information transmitting unit transmits the contents changed system information only when the contents of the system information is changed.

3. The radio base station as claimed in Claim 1 or 2, wherein the information transmitting unit transmits the contents changed assignment information only when the contents of the assignment information is changed.

4. A radio base station including a remote device and a central aggregation device and that performs radio communication with a user device, wherein
the central aggregation device includes an information transmitting unit that transmits to the remote device system information that is notified to the user device and assignment information indicating radio resource assignment used for notifying the system information, and
the remote device includes
an information receiving unit that receives the system information and the assignment information; and
a channel transmitting unit that transmits the system information to the user device via a predetermined downlink channel based on the assignment information received by the information receiving unit, wherein
the information transmitting unit, in the cell setting performed by the remote device and the central aggregation device, omits transmission of the system information and the assignment information, and transmits the system information and the assignment information to the remote device every time the system information is transmitted to the user device.

5. A communication control method implemented in a radio base station including a remote device and a central aggregation device and that performs radio communication with a user device, the communication control method comprising:
transmitting including the central aggregation device transmitting to the remote device system information that is notified to the user device and assignment information indicating radio resource assignment used for notifying the system information; and
transmitting including the remote device transmitting the system information to the user device via a predetermined downlink channel based on received assignment information, wherein
the transmitting the assignment information to the remote device includes, when the contents of the system information or the assignment information is changed, transmitting the contents changed system information or the contents changed assignment information.

6. A communication control method implemented in a radio base station including a remote device and a central aggregation device and that performs radio communication with a user device, the communication control method comprising:
transmitting including the central aggregation device transmitting to the remote device system information that is notified to the user device and assignment information indicating radio resource assignment used for notifying the system information;
transmitting including the remote device transmitting the system information to the user device via a predetermined downlink channel based on received assignment information; and
omitting the transmission of the system information and the assignment information in the cell setting performed by the remote device and the central aggregation device, wherein
the transmitting the assignment information to the remote device includes transmitting the system information and the assignment information to the remote device every time the system information is transmitted to the user device.
